# FASCICULE DE BREVET EUROPEEN

(11) **EP 0 672 447 B1**
(45) Date de publication et mention de la délivrance du brevet: **27.01.1999**
(21) Numéro de dépôt: 95400483.4
(22) Date de dépôt: 06.03.1995
(51) Int. Cl.: B01D 53/50, C01B 17/62, C01D 5/14, C01C 1/22, C01F 11/48

(54) **Procédé de traitement d'un effluent gazeux contenant de l'anhydride sulfureux**
Verfahren zur Behandlung von Schwefeldioxid enthaltenden Gasen
Process for the treatment of gases containing sulphur dioxide

(30) Priorité: 16.03.1994 FR 9403108
(43) Date de publication de la demande: 20.09.1995
(73) Titulaire: RHODIA CHIMIE, 92408 Courbevoie Cédex (FR)
(72) Inventeur: Chane-Ching, Jean-Yves, F-95600 Eaubonne (FR); Hustache, Gerard, F-38150 Roussillon (FR); Sabot, Jean-Louis, F-78600 Maisons Laffitte (FR)
(74) Mandataire: Delenne, Marc

(56) Documents cités:
- DE-A- 3 007 519
- FR-A- 1 540 773
- US-A- 4 201 755
- US-A- 4 834 959

## Description

La présente invention concerne un procédé de traitement d'un effluent gazeux pauvre en anhydride sulfureux en vue de l'obtention d'une solution de bisulfite d'ammonium ou de métal alcalin ou alcalino-terreux.

Plus particulièrement, elle est relative à un procédé de traitement d'un effluent gazeux pauvre en anhydride sulfureux en vue de l'obtention d'une solution de bisulfite de sodium.

Certains effluents gazeux industriels, en particulier les effluents provenant des unités de production d'acide sulfurique notamment par oxydation catalytique d'anhydride sulfureux, appelés également gaz de queue, renferment une certaine quantité d'anhydride sulfureux.

Plusieurs procédés ont déjà été mis en oeuvre afin de diminuer la teneur en anhydride sulfureux de ces effluents qui renferment également de l'oxygène.

Ainsi, dans le procédé dit de double absorption, le mélange gazeux après combustion subit une première oxydation catalytique et une première absorption, puis le gaz résiduaire, moins riche en anhydride sulfureux, est de nouveau oxydé et est ensuite envoyé dans une seconde colonne d'absorption. Si ce procédé peut permettre d'assurer un rejet final d'un effluent contenant environ 0,03 % en volume d'anhydride sulfureux, il nécessite en particulier des installations dont le coût d'investissement est très élevé.

L'absorption de l'anhydride sulfureux, contenu dans les gaz de queue, dans un milieu basique, par exemple dans des solutions de soude, est connue. Néanmoins, le pH très basique et la faible concentration en soufre de ces solutions rendent très difficile la valorisation industrielle des solutions finales obtenues.

Il a également été proposé de réaliser l'absorption de cet anhydride sulfureux dans un milieu légérement basique ; mais cette absorption est généralement accompagnée d'une réaction d'oxydation du soufre +IV en soufre +VI, c'est-à-dire d'une formation de sulfate de sodium (ou d'ammonium) due à la teneur élevée en oxygène de ces gaz de queue. Ce procédé présente ainsi l'inconvénient de générer, à partir d'un effluent gazeux, un effluent salin. Le document US-A-4834959 décrit un procédé selon le préambule de la revendication 1.

La présente invention a notamment pour but de remédier aux inconvénients mentionnés précédemment en proposant un procédé d'abattage efficace de l'anhydride sulfureux contenu dans les effluents gazeux permettant la production de solutions concentrées de bisulfite d'ammonium ou de métal alcalin ou alcalino-terreux valorisables, en particulier ne contenant pas une quantité sensible de sulfate d'ammonium ou de métal alcalin ou alcalino-terreux.

A cet effet, l'invention propose un procédé de traitement d'un effluent gazeux pauvre en anhydride sulfureux, en particulier contenant de l'anhydride sulfureux en une quantité inférieure à 2 % en volume et de l'oxygène, pour l'obtention d'une solution de bisulfite d'ammonium ou de métal alcalin ou alcalino-terreux, comprenant une première étape, dans laquelle on soumet ledit effluent à une absorption dans une solution de sulfite et de bisulfite d'ammonium ou de métal alcalin ou alcalino-terreux, de pH compris entre 5 et 7, et, caractérisé en ce que dans une deuxième étape, on met en contact au moins une partie de la solution obtenue à l'issue de la première étape avec un agent acide, différent de l'effluent gazeux.

L'effluent gazeux à traiter selon le procédé de l'invention est pauvre en anhydride sulfureux. Il contient ainsi de l'anhydride sulfureux en une quantité inférieure à 2 % en volume, généralement inférieure à 1 % en volume; cette quantité est, par exemple, d'au plus 0,5 % en volume, en particulier d'au plus 0,2 % en volume.

Cet effluent gazeux contient également de l'oxygène, en général à une teneur élevée. Il présente ainsi généralement un rapport en volume O₂/SO₂ supérieur à 5, par exemple supérieur à 20.

La première étape du procédé selon l'invention consiste à soumettre ledit effluent à une absorption dans une solution de sulfite et bisulfite d'ammonium ou de métal alcalin ou alcalino-terreux.

Cette absorption est effectuée dans une solution de sulfite et bisulfite de l'élément dont on cherche à obtenir une solution de bisulfite à l'issue du procédé selon l'invention.

Ainsi, plus particulièrement, on effectue cette absorption dans une solution de sulfite et bisulfite de sodium.

Le pH de la solution de sulfite et bisulfite d'ammonium ou de métal alcalin ou alcalino-terreux est compris entre 5 et 7, de préférence entre 5,5 et 6,5.

Il est généralement maintenu dans ces plages de valeurs durant la première étape.

Cette solution présente, de préférence, une concentration totale assez élevée en sulfite et bisulfite d'ammonium ou de métal alcalin ou alcalino-terreux.

Ainsi, dans le cas d'une solution de sulfite et bisulfite de sodium, cette concentration est en général d'au moins 3 mol/l, par exemple comprise entre 3 et 5 mol/l.

Une condition préférée de mise en oeuvre de la première étape du procédé selon l'invention est le maintien de la solution de sulfite et bisulfite d'ammonium ou de métal alcalin ou alcalino-terreux à une température (constante ou non) comprise entre 20 et 70 °C. Cette température est avantageusement comprise entre 25 et 55 °C.

La solution de sulfite et bisulfite est telle que sa teneur en sulfite d'ammonium ou de métal alcalin ou alcalino-terreux soit en-dessous de la limite de solubilité.

Cette solution peut être ajustée par l'addition d'un agent basique formé par une solution d'hydroxyde et/ou de carbonate de l'élément correspondant à celui dont on utilise une solution de sulfite et bisulfite dans la première étape.

Cet agent basique est ainsi formé, selon les cas, par une solution d'hydroxyde d'ammonium et/ou de carbonate d'ammonium, par une solution d'hydroxyde de métal alcalin (soude dans le cas du sodium) et/ou de carbonate de métal alcalin ou par une solution d'hydroxyde de métal alcalino-terreux et/ou de carbonate de métal alcalino-terreux.

Dans le cas où le procédé est effectué en vue de l'obtention d'une solution de bisulfite de sodium, on peut alors utiliser une solution de soude présentant en général une concentration d'environ 30 à 50 % et/ou une solution de carbonate de sodium présentant en général une concentration d'environ 20 à 30 %.

La solution de sulfite et bisulfite d'ammonium ou de métal alcalin ou alcalino-terreux peut éventuellement être soumise à une agitation durant la première étape. L'utilisation d'un simple appareil d'agitation magnétique peut suffire.

Cette première étape est mise en oeuvre dans tout dispositif d'absorption adéquat. On peut ainsi employer un réacteur ou une colonne d'absorption bien connus de l'homme du métier.

La solution obtenue à l'issue de la première étape est une solution de sulfite et bisulfite d'ammonium ou de métal alcalin ou alcalino-terreux présentant une teneur peu élevée en sulfate d'ammonium ou de métal alcalin ou alcalino-terreux. Celle-ci est avantageusement inférieure à 30 g/l, de préférence à 20 g/l et, par exemple, à 10 g/l.

Les gaz en provenance de la première étape peuvent, éventuellement, être soumis à une absorption d'appoint dans une solution d'hydroxyde et/ou de carbonate d'ammonium ou de métal alcalin ou alcalino-terreux, en particulier de soude et/ou de carbonate de sodium.

La deuxième étape du procédé selon l'invention consiste à mettre en contact au moins une partie de la solution obtenue à l'issue de la première étape avec un agent acide.

Cet agent acide est de préférence formé d'un gaz riche en anhydride sulfureux. Il contient ainsi de l'anhydride sulfureux en une quantité supérieure à 2 % en volume, plus particulièrement d'au moins 5 % en volume et, par exemple, d'au moins 7 % en volume.

Ce gaz contient également de l'oxygène, tel que le rapport en volume O₂/SO₂ soit inférieur à 5, plus particulièrement à 2; ledit rapport est par exemple d'environ 1.

Alors, le rapport molaire SO₂ du gaz (riche en anhydride sulfureux) utilisé dans la deuxième étape / SO₂ de l'effluent gazeux de départ à traiter est supérieur à 1, en particulier à 5. Ledit rapport peut être supérieur à 10, par exemple à 30.

Le gaz riche en anhydride sulfureux peut provenir par exemple du four d'oxydation du soufre d'une unité de production d'acide sulfurique.

Le procédé selon l'invention permet non seulement un abattage efficace de l'anhydride sulfureux contenu dans l'effluent gazeux de départ mais également l'obtention d'une solution de bisulfite d'ammonium ou de métal alcalin ou alcalino-terreux valorisable, c'est-à-dire répondant aux spécifications des solutions commerciales de bisulfite d'ammonium ou de métal alcalin ou alcalino-terreux.

Il permet en particulier l'obtention d'une solution de bisulfite de sodium valorisable.

Ainsi, la formation de sulfate d'ammonium ou de métal alcalin ou alcalino-terreux, en particulier de sulfate de sodium (dans le cas de la préparation d'une solution de bisulfite de sodium), par oxydation de l'anhydride sulfureux, est minimisée.

La solution obtenue à l'issue de la deuxième étape est une solution de bisulfite d'ammonium ou de métal alcalin ou alcalino-terreux présentant une teneur faible en sulfate correspondant, c'est-à-dire, suivant les cas, en sulfate d'ammonium ou de métal alcalin ou alcalino-terreux. Celle-ci, notamment en ce qui concerne le sulfate de sodium, est avantageusement inférieure à 30 g/l et, de préférence, à 20 g/l.

Cette solution présente, de manière préférée, un pH compris entre 3 et 5, en particulier entre 3,5 et 4,5.

Elle présente une concentration élevée en bisulfite d'ammonium ou de métal alcalin ou alcalino-terreux.

Ainsi, dans le cas d'une solution de bisulfite d'ammonium ou de métal alcalin, en particulier de sodium, celle-ci est avantageusement supérieure à 3 mol/l, de préférence à 4 mol/l.

Selon une variante de réalisation de l'invention, dans le cas d'une solution de bisulfite d'ammonium ou de métal alcalin, en particulier de sodium, la quantité employée d'agent acide, notamment de gaz riche en anhydride sulfureux, est telle que la solution obtenue à l'issue de la deuxième étape présente une concentration de 5 à 5,5 mol/l en bisulfite d'ammonium ou de métal alcalin, en particulier en bisulfite de sodium dans le cas de la préparation d'une telle solution, et un pH de 4 à 4,5.

Il est à noter que lorsque l'agent acide employé dans la deuxième étape est un gaz riche en anhydride sulfureux, alors l'anhydride sulfureux non absorbé dans cette deuxième étape peut être recyclé vers la première étape.

Le procédé selon l'invention peut être effectué en continu ou en discontinu.

Il est en particulier employé pour le traitement des effluents gazeux provenant des unités de production d'acide sulfurique, appelés également gaz de queue.

L'exemple suivant illustre l'invention sans toutefois en limiter la portée.

### EXEMPLE

Le procédé selon l'invention est mis en oeuvre dans un absorbeur constitué par un réacteur cylindrique, étanche aux gaz, de capacité utile d'environ 1,5 litre. La surface présentée par le liquide, contenu dans l'absorbeur, au gaz est d'environ 85 cm².

Ce réacteur est équipé :
- d'une enceinte thermostatée, permettant de maintenir des températures constantes ;
- d'un conduit d'arrivée de gaz permettant l'introduction d'un effluent gazeux contenant de l'anhydride sulfureux et de l'oxygène (l'effluent gazeux est amené près de la surface du liquide contenu dans l'absorbeur à l'aide d'un conduit dont l'extrémité est placée à environ 1 cm au-dessus de cette surface) ;
- d'un conduit de sortie de gaz équipé d'un système réfrigérant ;
- d'un système d'agitation ;
- d'un système étanche permettant l'introduction, en discontinu, d'un volume d'eau compensant les pertes par évaporation.

Deux réacteurs de lavage de gaz placés, en série, en aval de la sortie des gaz en provenance de l'absorbeur et contenant chacun 150 ml de soude de concentration 5 mol/l et assurant, si nécessaire, le piégeage total de l'anhydride sulfureux non absorbé dans l'absorbeur.

Dans une première étape, 240 ml d'une solution contenant du sulfite de sodium (1,65 mol/l), du bisulfite de sodium (2,29 mol/l) et du sulfate de sodium (0,023 mol/l) et présentant un pH de 6,2 sont introduits dans l'absorbeur et maintenus à 50 °C.

On fait circuler pendant 6 heures, au-dessus de cette solution, un effluent gazeux constitué par un mélange réalisé à partir d'un débit d'air de 99,825 l/h et d'anhydride sulfureux de 0,175 l/h.

Afin de compenser les pertes par évaporation, on introduit dans l'absorbeur 4 ml d'eau en discontinu toutes les heures pendant 5 heures, soit 20 ml d'eau au total.

La solution obtenue (volume de 234 ml) après 6 heures présente un pH de 6,0 et la composition suivante :
- 2,95 mol/l de bisulfite de sodium,
- 1,37 mol/l de sulfite de sodium, et
- 0,04 mol/l de sulfate de sodium (soit 5,7 g/l).

Le rendement d'absorption de l'absorbeur (défini par le rapport du nombre de moles de SO₂ effectivement absorbées sur le nombre de moles de SO₂ introduites dans l'absorbeur) est de 79 %.

Dans une seconde étape, 200 ml de la solution précédemment obtenue sont introduits dans un réacteur identique à celui mentionné ci-dessus.

On fait barboter dans cette solution un gaz constitué par un mélange réalisé à partir d'un débit d'air de 2,563 l/h et d'anhydride sulfureux de 0,437 l/h. Le barbotage est effectué par l'intermédiaire d'un fritté poreux immergé dans la solution.

Cette introduction de l'effluent gazeux est maintenue pendant 10 heures.

Afin de compenser les pertes par évaporation, on introduit en discontinu 10 ml d'eau à raison de 1 ml toutes les heures.

La solution finale obtenue présente un pH proche de 4,5, une teneur en bisulfite de sodium de l'ordre de 5,1 mol/l et une teneur en sulfate de sodium de 19 g/l.

## Revendications

1. Procédé de traitement d'un effluent gazeux contenant de l'anhydride sulfureux en une quantité inférieure à 2% en volume et de l'oxygène, en vue de l'obtention d'une solution de bisulfite d'ammonium ou de métal alcalin ou alcalino-terreux, comprenant une première étape, dans laquelle on soumet ledit effluent à une absorption dans une solution de sulfite et bisulfite d'ammonium ou de métal alcalin ou alcalino-terreux, de pH compris entre 5 et 7, et, caractérisé en ce que dans une deuxième étape, on met en contact au moins une partie de la solution obtenue à l'issue de la première étape avec un agent acide différent de l'effluent gazeux.

2. Procédé selon la revendication 1, caractérisé en ce que ledit effluent gazeux présente un rapport en volume O₂/ SO₂ supérieur à 5.

3. Procédé selon l'une des revendications 1 et 2, caractérisé en ce que ledit agent acide est formé d'un gaz contenant de l'anhydride sulfureux en une quantité supérieure à 2 % en volume et de l'oxygène, tel que le rapport en volume O₂/ SO₂ soit inférieur à 5.

4. Procédé selon l'une des revendications 1 à 3, caractérisé en ce que, lors de la première étape, la température de la solution de sulfite et bisulfite d'ammonium ou de métal alcalin ou alcalino-terreux est comprise entre 20 et 70 °C.

5. Procédé selon l'une des revendications 1 à 3, caractérisé en ce que, lors de la première étape, la température de la solution de sulfite et bisulfite d'ammonium ou de métal alcalin ou alcalino-terreux est comprise entre 25 et 55 °C.

6. Procédé selon l'une des revendications 1 à 5, caractérisé en ce que, lors de la première étape, on introduit, dans la solution de sulfite et bisulfite d'ammonium ou de métal alcalin ou alcalino-terreux, un agent basique formé par une solution d'hydroxyde d'ammonium et/ou de carbonate d'ammonium, par une solution d'hydroxyde de métal alcalin et/ou de carbonate de métal alcalin ou par une solution d'hydroxyde de métal alcalino-terreux et/ou de carbonate de métal alcalino-terreux.

7. Procédé selon l'une des revendications 1 à 6, caractérisé en ce que les solutions obtenues à l'issue de la première et de la deuxième étape présentent une teneur en sulfate d'ammonium ou de métal alcalin ou alcalino-terreux inférieure à 30 g/l.

8. Procédé selon la revendication 7, caractérisé en ce que ladite teneur en sulfate est inférieure à 20 g/l.

9. Procédé selon l'une des revendications 1 à 8, caractérisé en ce que la solution de bisulfite d'ammonium ou de métal alcalin ou alcalino-terreux obtenue à l'issue de la deuxième étape présente un pH compris entre 3 et 5.

10. Procédé selon l'une des revendications 1 à 9, caractérisé en ce que la solution de sulfite et bisulfite est une solution de sulfite et bisulfite de sodium présentant une concentration totale, en sulfite et bisulfite de sodium, d'au moins 3 mol/l.

11. Procédé selon l'une des revendications 1 à 10, caractérisé en ce que la solution de sulfite et bisulfite est une solution de sulfite et bisulfite de sodium et en ce que la solution de bisulfite obtenue à l'issue de la deuxième étape est une solution de bisulfite de sodium présentant une concentration en bisulfite de sodium supérieure à 3 mol/l.

12. Procédé selon la revendication 11, caractérisé en ce que la solution de bisulfite de sodium obtenue à l'issue de la deuxième étape présente un pH compris entre 3 et 5 et une teneur en sulfate de sodium inférieure à 30 g/l, de préférence à 20 g/l.

13. Procédé selon l'une des revendications 1 à 12, caractérisé en ce que ledit effluent gazeux contient de l'anhydride sulfureux en une quantité inférieure à 1 % en volume, en particulier d'au plus 0,5 % en volume.

14. Procédé selon l'une des revendications 1 à 13, caractérisé en ce que ledit effluent gazeux est issu d'une unité de production d'acide sulfurique.

## Claims

1. A process for treating a gaseous effluent containing less than 2% by volume of sulphur dioxide and containing oxygen, to obtain a solution of ammonium or an alkali or alkaline-earth metal bisulphite comprising a first step in which said effluent is absorbed in a solution of ammonium or an alkali or alkaline-earth metal sulphite and bisulphite at a pH of between 5 and 7 and characterized in that in a second step, at least a portion of the solution obtained from the first step is brought into contact with an acidic substance other than the gaseous effluent.

2. A process according to claim 1, characterised in that said gaseous effluent has a O₂/SO₂ volume ratio of more than 5.

3. A process according to claim 1 or claim 2, characterised in that said acidic substance is formed from a gas containing more than 2% by volume of sulphur dioxide and containing oxygen, such that the O₂/SO₂ volume ratio is less than 5.

4. A process according to any one of claims 1 to 3, characterised in that, during the first step, the temperature of the solution of ammonium or an alkali or alkaline-earth metal sulphite and bisulphite is between 20°C and 70°C.

5. A process according to any one of claims 1 to 3, characterised in that, during the first step, the temperature of the solution of ammonium or an alkali or alkaline-earth metal sulphite and bisulphite is between 25°C and 55°C.

6. A process according to any one of claims 1 to 5, characterised in that, during the first step, a basic substance formed by a solution of ammonium hydroxide and/or ammonium carbonate, by a solution of alkali metal hydroxide and/or alkali metal carbonate, or by a solution of alkaline-earth metal hydroxide and/or alkaline-earth metal carbonate is introduced into the solution of ammonium or an alkali or alkaline-earth metal sulphite and bisulphite.

7. A process according to any one of claims 1 to 6, characterised in that the solutions obtained from the first step and the second step have a concentration of ammonium or an alkali or alkaline-earth metal sulphate of less than 30 g/l.

8. A process according to claim 7, characterised in that said sulphate concentration is less than 20 g/l.

9. A process according to any one of claims 1 to 8, characterised in that the solution of ammonium or an alkali or alkaline-earth metal bisulphite obtained from the second step has a pH of between 3 and 5.

10. A process according to any one of claims 1 to 9, characterised in that the sulphite and bisulphite solution is a sodium sulphite and bisulphite solution with a total concentration of sodium sulphite and bisulphite of at least 3 mol/l.

11. A process according to any one of claims 1 to 10, characterised in that the sulphite and bisulphite solution is a sodium sulphite and bisulphite solution and in that the bisulphite solution obtained from the second step is a sodium bisulphite solution with a sodium bisulphite concentration of more than 3 mol/l.

12. A process according to claim 11, characterised in that the sodium bisulphite solution obtained from the second step has a pH of between 3 and 5 and a sodium sulphate concentration of less than 30 g/l, preferably less than 20 g/l.

13. A process according to any one of claims 1 to 12, characterised in that said gaseous effluent contains less than 1% by volume of sulphur dioxide, in particular at most 0.5% by volume.

14. A process according to any one of claims 1 to 13, characterised in that said gaseous effluent is produced by a sulphuric acid production unit.

## Patentansprüche

1. Verfahren zur Behandlung eines Schwefeldioxid in einer Menge von unter 2 Vol.-% und Sauerstoff enthaltenden Abgases im Hinblick auf das Erhalten einer Lösung von Bisulfit von Ammonium oder Alkalimetall oder Erdalkalimetall, umfassend eine erste Stufe, bei der man das genannte Abgas einer Absorption in einer Lösung von Sulfit und Bisulfit von Ammonium oder Alkalimetall oder Erdalkalimetall mit einem pH-Wert zwischen 5 und 7 unterzieht, dadurch gekennzeichnet, daß man in einer zweiten Stufe mindestens einen Teil der am Ende der ersten Stufe erhaltenen Lösung mit einem sauren Mittel in Kontakt bringt, das von dem Abgas verschieden ist.

2. Verfahren nach Anspruch 1, dadurch gekennzeichnet, daß das genannte Abgas ein Volumenverhältnis O₂/SO₂ von höher als 5 aufweist.

3. Verfahren nach einem der Ansprüche 1 und 2, dadurch gekennzeichnet, daß das genannte saure Mittel von einem Gas gebildet wird, das Schwefeldioxid in einer Menge von höher als 2 Vol.-% und Sauerstoff enthält, so daß das Volumenverhältnis O₂/SO₂ niedriger als 5 beträgt.

4. Verfahren nach einem der Ansprüche 1 bis 3, dadurch gekennzeichnet, daß bei der ersten Stufe die Temperatur der Lösung von Sulfit und Bisulfit von Ammonium oder Alkalimetall oder Erdalkalimetall zwischen 20 °C und 70 °C beträgt.

5. Verfahren nach einem der Ansprüche 1 bis 3, dadurch gekennzeichnet, daß bei der ersten Stufe die Temperatur der Lösung von Sulfit und Bisulfit von Ammonium oder Alkalimetall oder Erdalkalimetall zwischen 25 °C und 55 °C beträgt.

6. Verfahren nach einem der Ansprüche 1 bis 5, dadurch gekennzeichnet, daß man bei der ersten Stufe in die Lösung von Sulfit und Bisulfit von Ammonium oder Alkalimetall oder Erdalkalimetall ein basisches Mittel einträgt, gebildet durch eine Lösung von Ammoniumhydroxid und/oder Ammoniumcarbonat, durch eine Lösung von Alkalimetallhydroxid und/oder Alkalimetallcarbonat oder durch eine Lösung von Erdalkalimetallhydroxid und/oder Erdalkalimetallcarbonat.

7. Verfahren nach einem der Ansprüche 1 bis 6, dadurch gekennzeichnet, daß die am Ende der ersten Stufe und der zweiten Stufe erhaltenen Lösungen einen Gehalt an Sulfat von Ammonium oder Alkalimetall oder Erdalkalimetall von unter 30 g/l aufweisen.

8. Verfahren nach Anspruch 7, dadurch gekennzeichnet, daß der genannte Gehalt an Sulfat unter 20 g/l liegt.

9. Verfahren nach einem der Ansprüche 1 bis 8, dadurch gekennzeichnet, daß die am Ende der zweiten Stufe erhaltene Lösung von Bisulfit von Ammonium oder Alkalimetall oder Erdalkalimetall einen pH-Wert zwischen 3 und 5 aufweist.

10. Verfahren nach einem der Ansprüche 1 bis 9, dadurch gekennzeichnet, daß die Lösung von Sulfit und Bisulfit eine Lösung von Natriumsulfit und Natriumbisulfit ist, die eine Gesamtkonzentration an Natriumsulfit und Natriumbisulfit von mindestens 3 Mol/l aufweist.

11. Verfahren nach einem der Ansprüche 1 bis 10, dadurch gekennzeichnet, daß die Lösung von Sulfit und Bisulfit eine Lösung von Natriumsulfit und Natriumbisulfit ist, und daß die am Ende der zweiten Stufe erhaltene Lösung von Bisulfit eine Lösung von Natriumbisulfit ist, die eine Konzentration an Natriumbisulfit von höher als 3 Mol/l aufweist.

12. Verfahren nach Anspruch 11, dadurch gekennzeichnet, daß die am Ende der zweiten Stufe erhaltene Lösung von Natriumbisulfit einen pH-Wert zwischen 3 und 5 und einen Gehalt an Natriumsulfat von unter 30 g/l, vorzugsweise von 20 g/l aufweist.

13. Verfahren nach einem der Ansprüche 1 bis 12, dadurch gekennzeichnet, daß das genannte Abgas Schwefeldioxid in einer Menge von unter 1 Vol.-%, insbesondere von höchstens 0,5 Vol.-% enthält.

14. Verfahren nach einem der Ansprüche 1 bis 13, dadurch gekennzeichnet, daß das genannte Abgas aus einer Anlage zur Herstellung von Schwefelsäure stammt.
